# EUROPÄISCHE PATENTSCHRIFT

(11) **EP 2 684 720 B1**
(45) Veröffentlichungstag und Bekanntmachung des Hinweises auf die Patenterteilung: **04.09.2019**
(21) Anmeldenummer: 12175815.5
(22) Anmeldetag: 10.07.2012
(51) Int. Cl.: B60J 10/00, B60R 13/04

(54) **Mehrteilige Fahrzeugaußenblende**
Multi-component external vehicle panel
Panneau d'habillage extérieur de véhicule en plusieurs parties

(43) Veröffentlichungstag der Anmeldung: 15.01.2014
(73) Patentinhaber: DURA Automotive Holdings U.K., Ltd., Birmingham, B35 7AG (GB)
(72) Erfinder: Schulze zur Wiesche, Hans Joachim, 51143 Köln (DE)
(74) Vertreter: Bungartz Christophersen mbB

(56) Entgegenhaltungen:
- WO-A1-2005/102781
- DE-A1-102006 062 083
- DE-A1-102010 056 385

## Beschreibung

Die Erfindung betrifft eine Fahrzeugaußenblende mit einer Außenleiste und einer Trägerleiste, wobei im bestimmungsgemäßen Einbauzustand die Außenleiste mit der zum Fahrzeugäußeren gewandten Oberfläche eines äußeren Leistenteils einen Teil der Fahrzeugaußenfläche bildet und auf die Trägerleiste, die im bestimmungsgemäßen Einbauzustand mit der Fahrzeugkarosseriestruktur verbunden ist, aufgesetzt ist.

Eine derartige Fahrzeugaußenblende ist aus der WO 2005/102781 A1 oder der DE 10 2006 062 083 A1 bekannt. Die hierbei verwendeten Außenleisten sind allerdings als bloßes Zierteil konstruiert und übernehmen keinerlei Funktion im Hinblick auf die Scheibenführung etwaiger Versenkscheiben. Die DE 10 2010 056 385 A1 beschreibt eine Außenblende, bei der eine aus Kunststoff geformte Außenleiste einen Scheibenführungskanal zur Führung einer Versenkscheibe ausbildet. Die Außenleiste ist über einen Schnapphaken mit einem Hohlprofil der Karosseriestruktur verbunden.

Zur Überbrückung von konstruktiv bedingten Karosseriespalten oder Spalten zu benachbarten Bauteilen werden Fahrzeugaußenblenden verwendet. Diese haben neben der Überbrückung von Karosserieabschnitten oder Spalten aus optischen, aerodynamischen oder akustischen Gründen (Fahrtwindgeräusche) auch den Zweck, Funktionsteile wie Dichtungen zu tragen sowie Führungen zum Beispiel für vertikal verschiebliche Seitenscheiben (Versenkscheiben) auszubilden.

Man ist zunehmend bestrebt, aus aerodynamischen und optischen Gründen der äußeren Seitenfläche eines Kraftfahrzeugs ein möglichst bündiges Erscheinungsbild zu geben, bei der die Fensterscheibenaußenfläche im Wesentlichen bündig zur Außenfläche der Fahrzeugblende und der sonstigen seitlichen Fahrzeugaußenfläche verläuft.

Aus der deutschen Offenlegungsschrift DE 10 2004 035 380 A1 ist eine Konstruktion bekannt, bei der eine Fahrzeugaußenblende und die ihr zugeordnete, vertikal verschiebliche Fensterscheibe im Wesentlichen bündig zueinander angeordnet sind. An der Innenseite des Scheibenrandes ist eine Führungsleiste angeordnet, die einen Versatz zur Scheibenaußenfläche herstellt und so ermöglicht, in eine von der Fahrzeugaußenblende gebildete, eine Gleitdichtung tragende Aufnahme einzugreifen, so dass das Fenster über Führungsleiste und Gleitdichtung und mittelbar über die Fahrzeugaußenblende geführt ist, gleichzeitig aber die zum Fahrzeugäußeren weisenden Flächen bündig zueinander ausgerichtet sind. Die offenbarte Konstruktion weist allerdings eine Reihe von Nachteilen auf.

Scheibenführungskräfte und Windabzugskräfte, die von der Versenkscheibe auf die Führung und damit auf die Fahrzeugaußenblende wirken, werden ganz wesentlich über den die Führungsleiste außenseitig übergreifenden Steg des äußeren Leistenteils der Fahrzeugaußenblende abgestützt. Dies führt zu Spannungsspitzen am Ansatz des vom äußeren Leistenteil nach innen abgehenden Stegs, die konstruktive Gegenmaßnahmen erfordern, die wiederrum Nachteile mit sich bringen können. So können zum Beispiel durch am Ansatz des nach innen abgehenden Stegs vorgesehene Materialanhäufungen oder Verrippungen, mit denen den Spannungsspitzen entgegengewirkt werden soll, Spritzguss bedingte Einfallstellen auf der außenseitigen Zierfläche des äußeren Leistenteils der Blende entstehen, die es aus optischen Gründen zu vermeiden gilt.

Außerdem sind die Befestigungsmittel, mit der die Fahrzeugaußenblende mit der Karosserie verbunden wird, bei einer werkstoffeinstückigen Konstruktion notwendigerweise an einer Stelle anzuordnen, die für ein Werkzeug bei der Montage zugänglich ist. Dies macht es erforderlich, den an der Karosseriestruktur anliegenden Steg relativ lang auszugestalten und die Karosseriestruktur mit Blick auf den an der Karosseriestruktur anliegenden Steg der Außenblende derart auszurichten, dass die Befestigungsmittel zur Montage zugänglich sind. Die konstruktiven Freiheiten des Konstrukteurs sowohl bei der Gestaltung der Karosseriestruktur, die demnach auch die spätere Blendenbefestigung berücksichtigen muss, als auch bei der Gestaltung der Fahrzeugaußenblende selbst sowie bei der Bauraumausnutzung sind somit eingeschränkt.

Des Weiteren kommt hinzu, dass die Fahrzeugaußenblende sich konstruktionsbedingt allein an der Karosseriestruktur ausrichtet, an der sie befestigt ist. Mit Blick auf die erforderlichen Toleranzen, die die Scheibenführung in Bezug auf die Scheibe und deren erforderliches Zusammenwirken mit an der Blende angeordneten Funktionsbauteilen einhalten muss (zum Beispiel die richtige Anlage der Scheibe an Dichtungen, die von der Blende gehaltenen werden oder sich zumindest daran ausrichten), wäre jedoch eine Ausrichtung der Blende an anderen Bauteilen wie eben der Fensterscheibe und/oder in Bezug auf etwaige Dichtungen sinnvoller. Konzeptbedingt bergen bekannte Konstruktionen daher den Nachteil, dass viele Kompromisse hinsichtlich der Ausrichtung der zusammenwirkenden Bauteile gemacht werden müssen.

Schließlich führt die im Stand der Technik offenbarte Konstruktion die Versenkscheibe nur in positiver/negativer Y-Richtung (Quer zur Fahrtrichtung), nicht aber in positiver und negativer X-Richtung (in oder entgegen der Fahrrichtung). Dies macht zusätzliche Führungen erforderlich, weswegen Scheibenführungen für Versenkscheiben zumeist mehrsträngig ausgeführt sind.

Vor diesem Hintergrund macht es sich die Erfindung zur Aufgabe, einen Aufbau einer Fahrzeugaußenblende, die eine bündige Ausrichtung der Versenkscheibe zur Fahrzeugblendenaußenfläche ermöglicht, zur Verfügung zu stellen, der die vorstehend genannten Nachteile ausräumt. Es sollen insbesondere die konstruktiven Freiheiten erhöht und die Stabilität der Gesamtkonstruktion verbessert werden. Außerdem soll die Gesamtkonstruktion dazu genutzt werden, die Führung der Scheibe in X-Richtung zu optimieren.

Zur Lösung dieser Aufgabe ist vorgesehen, dass die Außenblende und die Trägerleiste gemeinsam einen Führungskanal für ein an einer Versenkscheibe angeordnetes Führungsprofil ausbilden. In dieses Führungsprofil kann zum Aufbau einer Scheibenführung für die Versenkscheibe eines Kraftfahrzeugs ein Führungsprofil, das auf der zum Fahrzeuginneren gewandten Scheibenoberfläche angeordnet ist, eingreifen. Das Führungsprofil hintergreift dabei einen Teil der Außenblende auf deren zum Fahrzeuginneren gewandten Seite und wird bevorzugt, wie nachfolgend noch erläutert werden wird, zusätzlich auch von der Trägerleiste gestützt.

Die Trägerleiste und die Außenleiste sind als zunächst voneinander getrennte Bauteile ausgeführt, die erst beim Montagevorgang zusammengeführt werden. Bevorzugt erfolgt dieses aufeinander aufsetzen über eine zwischen der Trägerleiste und der Außenleiste wirkende Rastverbindung.

Dadurch, dass die Außenleiste und die Trägerleiste nicht als integrale Bestandteile einer einstückig ausgeführten Fahrzeugaußenblende ausgebildet sind, sondern die Fahrzeugaußenblende aus zumindest diesen beiden Teilen gebildet ist, ergibt sich die Möglichkeit, die Außenleiste relativ zur unmittelbar an der Fahrzeugkarosseriestruktur bzw. der Türstruktur befestigten Trägerleiste zu verschieben, insbesondere in Z-Richtung zu verschieben (im Wesentlichen parallel zur Fahrzeughochachse), so dass die Ausrichtung und Positionierung der Außenleiste zumindest bezüglich einiger Koordinaten von der Ausrichtung und Positionierung der Trägerleiste und damit von der Karosseriestruktur unabhängiger wird. Dies ermöglicht es zum Beispiel, die Außenleiste nach deren Montage gezielt in einer Richtung zu verschieben, um etwaige Spalte zu benachbarten Bauteilen, zum Beispiel zu Dichtungen in der Karosseriestruktur, zu schließen. Bei der Montage erkannte Fehlstellungen können somit zumindest zum Teil korrigiert werden.

Außerdem kann zwischen der Trägerleiste und der Außenleiste eine Rastverbindung vorgesehen sein, die von an der Trägerleiste und der Außenleiste angeordneten, zueinander korrespondierenden Rastgliedern gebildet ist, wobei die an der Außenleiste vorgesehenen Rastglieder derart positioniert sind, dass im bestimmungsgemäßen Einbauzustand eine von der Scheibe auf die Außenblende wirkende Kraft vor dem äußeren Leistenteil auf die Trägerleiste abgeleitet ist, so dass das äußere Leistenteil aus dem Kraftfluss ausgenommen ist. Die von der Scheibe auf die Außenblende wirkende Kraft kann dabei unmittelbar auf die Außenblende wirken, das heißt es besteht ein unmittelbarer Kontakt zwischen Außenblende und Scheibe. In der Regel werden aber andere Bauteile zwischen Scheibe und Außenblende angeordnet sein - scheibenseitig zum Beispiel die angesprochene Führungsschiene und blendenseitig Dichtungen oder ähnliche an der Blende angeordnete Funktionsbauteile - so dass die Kraftübertragung zwischen Scheibe und Blende in den meisten Fällen mittelbar erfolgt.

Die Trägerleiste bzw. die Außenleiste kann zur Ausbildung einer Rastverbindung eine sich in Z-Richtung kanalartig erstreckende Rastaufnahme ausbilden, in der ein an der Außenleiste bzw. der Trägerleiste vorgesehener, korrespondierender und sich entlang der Außenleiste bzw. Trägerleiste in Z-Richtung erstreckender Raststeg einsetzbar ist. Die Rastglieder sind demnach bevorzugt von einer Rastaufnahme (weiblich) und einem Gegenstück (männlich) gebildet, wobei die Rastaufnahme entweder an der Trägerleiste oder an der Außenleiste vorgesehen ist und das Rastglied, das mit der Rastaufnahme zusammenwirkt, an der jeweils anderen Leiste vorgesehen ist. Eine derartige Konstruktion ermöglicht ein einfaches Aufstecken der Außenleiste auf die Trägerleiste, nachdem die Trägerleiste bestimmungsgemäß über Befestigungsmittel an der Karosseriestruktur befestigt wurde.

Um ein nach der Montage auftretendes ungewolltes Verrutschen der Außenleiste gegenüber der Trägerleiste in Z-Richtung auszuschließen, kann vorgesehen sein, dass die Rastverbindung mehrdirektional ist und die Außenleiste mit der Trägerleiste über eine Schiebe-/Rastverbindung verrastet. Mit einer Schiebe-/Rastverbindung ist eine Rastverbindung gemeint, bei der die Außenleiste nach dem Aufsetzen auf die Trägerleiste die Rastverbindung durch gezieltes, nachträgliches Verschieben gegenüber der Trägerleiste eingeht.

Die Schiebe-/Rastverbindung kann insbesondere derart ausgestaltet sein, dass Außenleiste in eine erste Richtung (Aufsetzrichtung A), bevorzugt in Y-Richtung, auf die Trägerleiste aufgesetzt wird (mit oder ohne eine Verrastung), um anschließend in eine zur ersten Richtung im Wesentlichen orthogonal ausgerichteten zweiten Richtung (Verschieberichtung V), bevorzugt in Z-Richtung, gegenüber der Trägerleiste verschoben zu werden, um mit der Trägerleiste zu verrasten.

Die Rastverbindung kann nicht nur mehrdirektional, sondern zusätzlich dazu auch mehrstufig ausgeführt sein. Mehrstufig bedeutet in diesem Zusammenhang, dass beim Aufsetzen der Außenleiste auf die Trägerleiste in der Aufsetzrichtung A bereits eine erste Rastverbindung entsteht (zum Beispiel eine in Y-Richtung wirkende Rastverbindung) und durch Verschieben der Außenleiste gegenüber der Trägerleiste in der Verschieberichtung V, die bevorzugt orthogonal zur Aufsetzrichtung ist, eine zweite Rastverbindung entsteht (zum Beispiel eine in Z-Richtung wirkende Rastverbindung).

Unabhängig davon, ob die zwischen der Trägerleiste und der Trägerleiste wirkende Rastverbindung mehrstufig und/oder mehrdirektional ist, kann vorgesehen sein, dass die Schiebe-/Rastverbindung eine einseitig wirkende Rastverbindung ist, die nach dem Verschieben der Außenleiste gegenüber der Trägerleiste in Verschieberichtung V (zum Beispiel in positive Z-Richtung) und dem Herstellen der Rastverbindung das anschließende Verschieben der Außenleiste in die entgegengesetzte Richtung (zum Beispiel in negative Z-Richtung) nicht mehr zulässt. Soll hingegen sichergestellt sein, dass die Außenleiste nach der Erstmontage wieder von der Trägerleiste entfernt werden kann, kann die Schiebe-/Rastverbindung derart ausgestaltet sein, dass gegen Aufbringen einer Lösekraft die Rastverbindung wieder überwunden werden kann, um die Rastverbindung aufzuheben und die Außenleiste von der Trägerleiste auch nachträglich abnehmen zu können, so dass die Außenleiste - zum Beispiel nach einer Beschädigung - ausgetauscht werden kann.

Zur Realisierung der Schiebe-/Rastverbindung kann ein erstes Rastglied vorgesehen sein, dass mittels einer Materialschwächung oder Materialausnehmung einfedernd am Raststeg oder an der Rastaufnahme ausgebildet ist.

Aufgrund der Tatsache, dass die Trägerleiste und Außenleiste vor der Erstmontage am Fahrzeug zwei voneinander getrennte Bauteile sind, ist es nicht mehr erforderlich, dass Aufnahmen für die Befestigungsmittel, mit der die Fahrzeugaußenblende am Fahrzeug montiert wird, nicht von dem äußeren Leistenteil verdeckt sein dürfen, um für die Montage zugänglich zu sein. Somit kann auch vorgesehen sein, dass die Aufnahmen für Befestigungsmittel, mit denen die Trägerleiste bei bestimmungsgemäßer Montage der Außenblende an der Karosseriestruktur zu befestigen ist, derart angeordnet sind, dass sie nach der Montage der Außenleiste von der Außenleiste verdeckt sind. Insbesondere kann vorgesehen sein, dass die Aufnahmen für die Befestigungsmittel - in X-Richtung gesehen - auf der von Scheibenrand abgewandten Seite der Trägerleiste angeordnet sind. Die Aufnahmen für die Befestigungsmittel sind im einfachsten Fall einfache Löcher bzw. Bohrungen in der Trägerleiste, durch die die Befestigungsmittel hindurch ragen können.

Durch die vorstehend beschriebene Konstruktion einer Außenblende ist die Realisierung einer verbesserten Scheibenführung für eine Versenkscheibe eines Kraftfahrzeugs möglich, bei der auf der zum Fahrzeuginneren gewandten Scheibenoberfläche ein Führungsprofil angeordnet ist, das eine an der Außenleiste vorgesehene Dichtungsaufnahme auf der zum Fahrzeuginneren gewandten Seite hintergreift, wobei gleichzeitig die Scheibe im Wesentlichen bündig zur zum Fahrzeugäußeren gewandten Oberfläche des äußeren Leistenteils ist. Bei dem Führungsprofil kann es sich sowohl um eine sich entlang des Scheibenrandes erstreckenden, längliche Führungsprofilleiste handeln als auch um einen oder mehrere in Abstand zueinander angeordnete gegenüber einer Leiste kürzere Führungsprofilwinkel handeln.

Das Führungsprofil weist bevorzugt einen sich von der Scheibe im Wesentlichen senkrecht weg erstreckenden Basisschenkel und einen vom Basisschenkel abgewinkelten Führungsschenkel auf. Ein derart winkliger Profilquerschnitt ist von Vorteil, weil damit ein größerer Abstand überbrückt werden kann und das Führungsprofil einen breiteren Bereich der Außenleiste hintergreifen kann, als dies der Fall wäre, wenn das Führungsprofil lediglich einen eher flachen, rechteckigen Profilquerschnitt aufweisen würde. Damit kann das Führungsprofil insbesondere eine in der Außenleiste vorgesehene Dichtungsaufnahme hinter- und übergreifen anstatt in die Dichtungsaufnahme bzw. die darin angeordnete Dichtung eingreifen zu müssen, während gleichzeitig die äußere Scheibenoberfläche zu der äußeren Fahrzeugoberfläche im Wesentlichen bündig ausgerichtet sein kann.

Weiter ist es von Vorteil, wenn das Führungsprofil derart in den Führungskanal eingreift, dass die Scheibe in positiver und negativer X-Richtung geführt ist. Dies kann insbesondere dadurch erreicht werden, dass sich das Führungsprofil, bevorzugt der Basisschenkel, sich zur einen Seite gegen die Trägerleiste oder ein an der Trägerleiste angeordnetes Funktionsbauteil, insbesondere eine sich in Y-Richtung erstreckende Dichtung, abstützt und zur anderen Seite gegen die Außenblende oder ein an der Außenblende abstützendes Funktionsbauteil, insbesondere eine sich in Y-Richtung erstreckende Dichtung, abstützt. Durch die Verwendung eines solchen beidseitig abstützenden Führungskanals kann die sonstige Führung der Scheibe innerhalb der Karosseriestruktur vereinfacht werden.

Ein weiterer Vorteil der beschriebenen Ausgestaltung der Außenblende ist, dass an der Trägerleiste die Befestigungen für Formteile für die Türinnenverkleidung angeordnet werden können. Hierbei sind sowohl Rastverbindungen denkbar, die das spätere Demontieren der Türinnenverkleidung ermöglichen können, als auch solche, bei denen die Türinnenverkleidung nach ihrer Erstanbringung an der Trägerleiste nicht mehr von dieser entfernt werden kann. Die Türinnenverkleidung kann also auch mit der Trägerleiste verklebt oder verschweißt, insbesondere reibverschweißt sein. Es ist nicht mehr erforderlich, die Türinnenverkleidung an der Türstruktur zu befestigen. Vielmehr können Außenblende mit Trägerleiste und Außenleiste und die Türinnenverkleidung einen gesamtheitlichen, die Türstruktur innen und außen verkleidenden Aufbau bilden.

Der vorstehend beschriebene Aspekt des Anbringens der Türinnenverkleidung an einer auch die Außenblende tragenden und mit der Karosseriestruktur verbundenen Trägerleiste wird als eigenständige Erfindung angesehen.

Sofern vor- oder nachstehend von X-, Y- oder Z-Richtung die Rede ist, ist mit diesen Richtungsangaben lediglich die wesentliche Hauptrichtung einer Bewegung oder Verschiebung unabhängig vom Vorzeichen (sofern nicht explizit erwähnt) angegeben. Man verlässt den Rahmen der Erfindung nicht, wenn von der strengen Koordinatenrichtung in gewissen Grenzen abgewichen wird. Beispielsweise kann eine Bewegung oder Verschiebung in Z-Richtung auch Anteile einer Bewegung oder Verschiebung in X- und/oder Y-Richtung enthalten, solange die Wesentliche Bewegung oder Verschiebung in Z-Richtung stattfindet. So ist zum Beispiel die Bewegung einer Versenkscheibe als eine Bewegung in Z-Richtung zu verstehen, obwohl diese regelmäßig nicht streng vertikal verläuft sondern bei üblichen Kraftfahrzeugen immer auch eine kleinere Komponente in Y- oder gar in X-Richtung enthält. Diese Auslegung trägt dem Umstand Rechnung, dass der räumliche Verlauf der Karosseriestruktur und der daran angepassten und/oder sich daran orientierenden Bauteile (einschließlich deren Bewegung) in dem Bereich, in dem die erfindungsgemäßen Außenblenden eingesetzt werden, üblicherweise gekrümmt verlaufen und außerdem nicht streng an einer einzigen Koordinatenrichtung folgen. Der Begriff Karosseriestruktur im Sinne dieser Anmeldung umfasst auch die Türstruktur.

Ausführungsbeispiele der Erfindung werden anhand der nachfolgend beschriebenen Zeichnungen näher erläutert. In den Zeichnungen zeigt
- Fig. 1: eine mehrteilige, eine Außenleiste und eine Trägerleiste umfassende Fahrzeugaußenblende mit daran angeordneten Dichtungen und einer daran angeordneten Türinnenverkleidung,
- Fig. 2: einen ersten möglichen Querschnitt einer an einer Türstruktur angeordneten Außenblende mit daran angeordneten Dichtungen und einer daran angeordneten Türinnenverkleidung,
- Fig. 3: einen zweiten möglichen Querschnitt einer an einer Türstruktur angeordneten Außenblende mit daran angeordneten Dichtungen und einer daran angeordneten Türinnenverkleidung,
- Fig. 4: einen dritten möglichen Querschnitt einer an einer Türstruktur angeordneten Außenblende mit daran angeordneten Dichtungen und einer daran angeordneten Türinnenverkleidung,
- Fig. 5: eine perspektivische Detailansicht einer zwischen der Außenleiste und der Trägerleiste wirkenden Rastverbindung,
- Fig. 6: einen Abschnitt der Außenleiste mit Rastgliedern der Rastverbindung im Detail,
- Fig. 7: eine Draufsicht auf die Trägerleiste in dem zum Abschnitt der Außenleiste aus Figur 6 korrespondierenden Bereich mit korrespondierenden Rastgliedern,
- Fig. 8: eine schematische Ansicht des Zusammenwirkens von Außenleiste und Trägerleiste im Bereich einer Schiebe-/Rastverbindung mit einer ersten möglichen Ausgestaltung der Verrastung,
- Fig. 9: eine zweite mögliche, einseitig wirkende Ausgestaltung der in Figur 8 gezeigten Verrastung,
- Fig. 10: eine alternative Ausgestaltung des in Figur 1 gezeigten Aufbaus,
- Fig. 11: die Trägerleiste und die Türinnenverkleidung mit daran angeordneten Rastgliedern zur Verrastung der Türinnenverkleidung an der Trägerleiste,
- Fig. 12: eine erste Schnittansicht durch den in Figur 11 gezeigten Aufbau,
- Fig. 13: eine zweite Schnittansicht durch den in Figur 11 gezeigten Aufbau, und
- Fig. 14: eine dritte Schnittansicht durch den in Figur 11 gezeigten Aufbau.

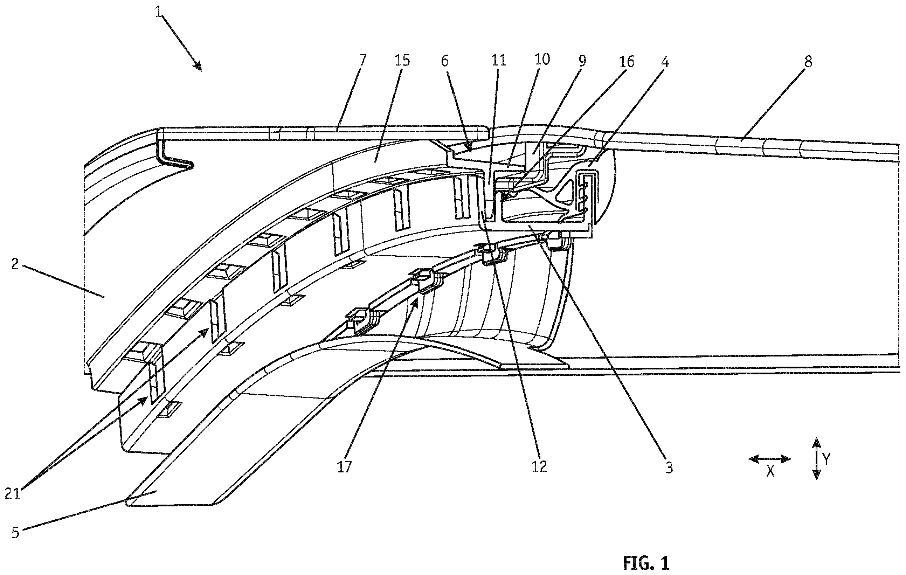

Figur 1 zeigt eine mehrteilige Fahrzeugaußenblende 1 mit einer Außenleiste 2 und einer Trägerleiste 3 und mit an der Fahrzeugaußenblende 1 angeordneten Funktionsbauteilen in Form von Dichtungen 4 sowie einem an der Fahrzeugaußenblende 1 angeordneten Formteil einer Türinnenverkleidung 5. Eine in einem Dichtungsaufnahmekanal 6 vorzusehende Dichtung ist der besseren Übersichtlichkeit halber nicht eingezeichnet, deren Lage kann aber den nachfolgend noch zu beschreibenden Figuren entnommen werden.

Es ist erkennbar, dass die zum Fahrzeugäußeren weisende Oberfläche eines äußeren Leistenteils 7 der Außenleiste 2 zur der äußeren Oberfläche einer Versenkscheibe 8 bündig ist. Trotzdem muss die Scheibe 8 geführt werden.

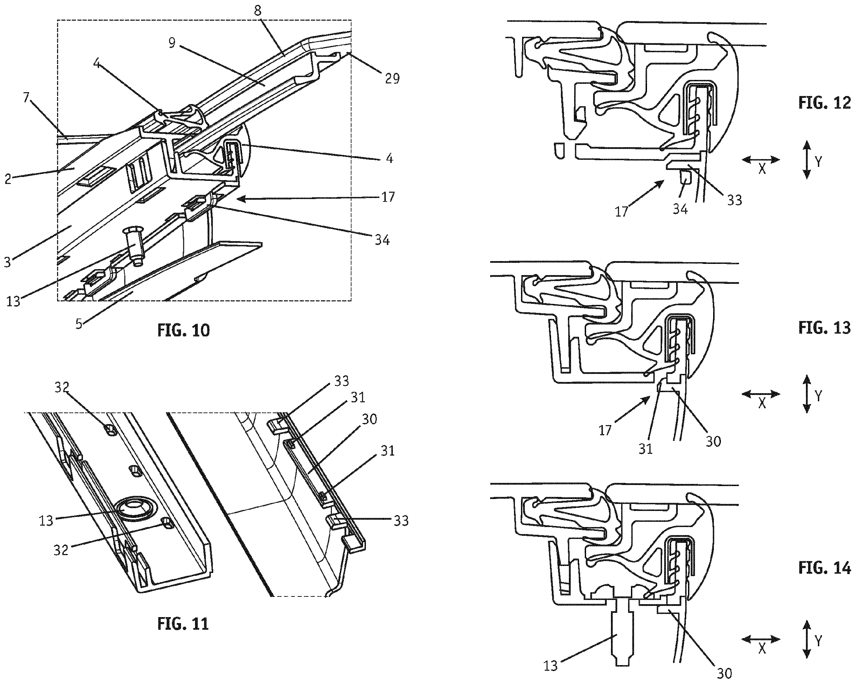

Dies wird dadurch erreicht, dass ein Führungsprofil 9, das auf der zum Fahrzeuginneren gewandten Seite der Scheibe 8 an der Scheibe angeordnet ist, den zum Fahrzeuginneren liegenden Wandungssteg 10 des Dichtungsaufnahmekanals 6 auf der zum Fahrzeuginneren gewandten Seite hintergreift. Das Führungsprofil 9 hintergreift den Dichtungsaufnahmekanal 6 also im Ganzen und dringt nicht etwa - wie im eingangs erwähnten Stand der Technik gezeigt - in den Dichtungsaufnahmekanal 6 ein. Das in Figur 1 gezeigte Führungsprofil 9 ist von einem eher kurzen Führungsprofilwinkel gebildet, kann aber, wie Figur 10 beispielhaft zeigt, auch von einer sich entlang des Scheibenrands erstreckenden Leiste gebildet sein.

Der Scheibenführungskanal, in den das Führungsprofil 9 eingreift, wird also zum Teil von der Außenleiste 2 und zum Teil von der Trägerleiste 3 gebildet.

Von dem Dichtungsaufnahmekanal 6 abgehend, in diesem Fall beispielhaft von dem Wandungssteg 10 abgehend, ist ein Rastglied in Form eines Raststegs 11 vorgesehen, das mit einem korrespondierenden Rastglied in Form einer Rastaufnahme 12 in Eingriff steht. Die Rastaufnahme 12 ist Teil der Trägerleiste 3, die wiederrum über Befestigungsmittel 13 (in Figur 1 nicht gezeigt) mit der Karosseriestruktur 14 (in Figur 1 nicht gezeigt), insbesondere mit einem Holm der Türstruktur, verbunden ist.

Scheibenführungskräfte, Windabzugskräfte oder sonstige auf die Scheibe 8 wirkende Kräfte, die über das Führungsprofil 9 auf die Außenblende 1, insbesondere auf die Außenleiste 2 übertragen werden, werden zunächst in den Wandungssteg 10 des Dichtungsaufnahmekanals 6 eingeleitet. Da das Führungsprofil 9 den Wandungssteg 10 jedoch auf der zum Fahrzeuginneren weisenden Seite des Dichtungsaufnahmekanals 6 überlappend übergreift und in unmittelbarer Nähe der Krafteinleitung bereits der Raststeg 11 abgeht, werden die Kräfte von der Scheibe 8 auf direktem Wege über Trägerleiste 3 in die Karosseriestruktur eingeleitet, ohne das die Kräfte die Stelle, an der der vom äußeren Leistenteil 7 der Außenleiste 2 abgehende Steg 15 des Dichtungsaufnahmekanals 6 am äußeren Leistenteil 7 ansetzt, wesentlich mit einer Kraft belastet wird. Diese Stelle, die für die Stabilität herkömmlicher Konstruktionen kritisch ist, ist damit erheblich entlastet. Auf Materialanhäufungen oder Verrippungen an dieser Stelle zwecks Stabilitätssteigerung kann verzichtet werden, so dass auch keine Spritzguss bedingten Einfallstellen, die insbesondere bei Hochglanzbauteilen ins Gewicht fallen, zu befürchten sind.

Die gezeigt Konstruktion gewährleistet also eine Rastverbindung 16, die von an der Trägerleiste 3 und der Außenleiste 2 angeordneten, zueinander korrespondierenden Rastgliedern 11, 12 gebildet ist, wobei die an der Außenleiste 2 vorgesehenen Rastglieder 11 derart positioniert sind, dass im bestimmungsgemäßen Einbauzustand eine von der Scheibe 8 auf die Außenleiste 2 wirkende Kraft vor dem äußeren Leistenteil 7 über die Rastglieder 11, 12 auf die Trägerleiste 3 abgeleitet ist.

Weiter ist Figur 1 zu entnehmen, dass nicht nur die Trägerleiste 3 und die Außenleiste 2 über eine noch näher zu erläuternde Rastverbindung 16 verbunden sind, sondern dass auch ein Formteil einer Türinnenverkleidung 5 über eine Rastverbindung 17 an der Trägerleiste 3 angeordnet ist.

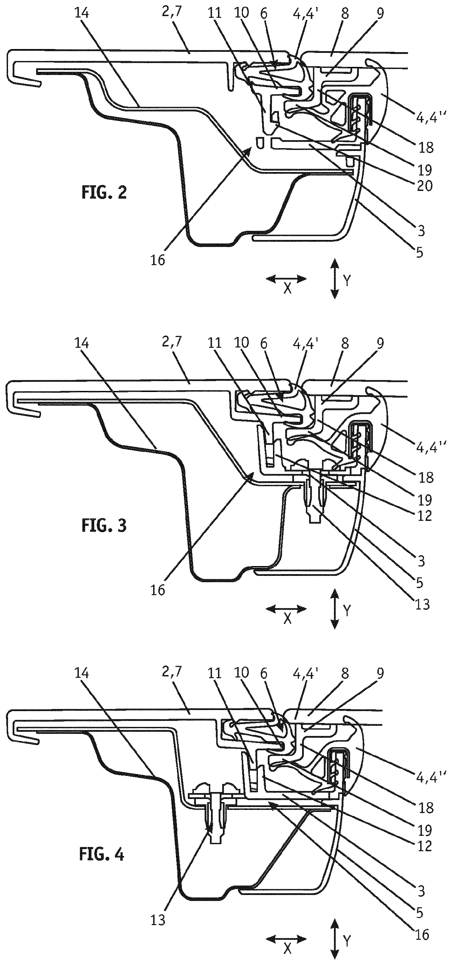

Figur 2 zeigt einen ersten möglichen Querschnitt einer an einer Türstruktur 14 angeordneten Außenblende 1 mit daran angeordneten Dichtungen 4 und einer daran angeordneten Türinnenverkleidung 5. Im Gegensatz zu dem in Figur 1 gezeigten Aufbau sind jedoch einige Unterschiede erkennbar.

Zum einen zeigt Figur 2 sowohl die in dem Dichtungsaufnahmekanal 6 aufgenommene Dichtung 4' als auch die an der Trägerleiste 3 angeordnete Dichtung 4". Das Führungsprofil 9 übergreift - wie in Figur 1 - den Dichtungsaufnahmekanal 6 im Ganzen. Das in den von Außenleiste 2 und Trägerleiste 3 gebildeten Scheibenführungskanal eingreifende Führungsprofil 9 weist einen sich von der Scheibe 8 im Wesentlichen rechtwinklig weg erstreckenden Basisschenkel 18 und einen vom Basisschenkel 18 im weitgehend orthogonal abgewinkelten Führungsschenkel 19 auf.

Die Dichtung 4" ist derart dimensioniert, dass sich rückseitigen Fläche des Basisschenkels 18 an der Dichtung 4" abstützt. Die Dichtung 4' ist derart dimensioniert, dass sich die vorderseitige Fläche des Basisschenkels 18 an der Dichtung 4' abstützt. Hierdurch ist gewährleistet, dass das Führungsprofil 9 derart in den Führungskanal eingreift, dass die 8 Scheibe in positiver und negativer X-Richtung geführt ist. Die zum Fahrzeugäußeren weisende Fläche des Führungsschenkels 19 stützt die Scheibe 8 je nach Fahrzeugseite in positiver oder negativer in Y-Richtung ab. Der Fuß des Führungsprofils 9, mit dem dieser an der Scheibe 8 befestigt ist, stützt sich in der jeweils anderen Y-Richtung gegen die Dichtung 4" ab.

Weiter verdeutlicht Figur 2 ergänzend zu Figur 1 und den Figuren 6 bis 8 die zwischen der Außenleiste 2 und der Trägerleiste 3 bestehende Rastverbindung 16. Der Raststeg 11 hintergreift mit einem an einem Rastfortsatz 20 eine in der Rastaufnahme 12 (vgl. Figur 3) vorgesehene Ausnehmung. In Figur 1 ist außerdem gezeigt, dass die Wandung der Rastaufnahme 12 auf der dem Rastfortsatz 20 abgewandten Seite eine Ausnehmung 21 aufweist, in die das den Rastfortsatz 20 ausbildende Rastglied einfedern kann, um das Zusammenfügen von der Rastglieder zu erleichtern.

Figur 3 zeigt einen zweiten möglichen Querschnitt einer an einer Türstruktur 14 angeordneten Außenblende 1 mit daran angeordneten Dichtungen 4 und einer daran angeordneten Türinnenverkleidung 5, wobei der Schnitt in Figur 3 im Gegensatz zu Figur 2 versetzt zu den Rastgliedern 11, 12 gemacht ist und die Positionierung eines Befestigungsmittels 13 verdeutlicht. Außerdem ist sind bei Figur 3 die Dichtungen 4 nicht derart ausgebildet, dass sie über das Führungsprofil 9 eine Führung der Scheiben 8 in positiver und negativer X-Richtung ermöglichen würden, denn die Dichtung 4'" stützt die rückseitige Fläche des Basisschenkels 18 nicht ab. Gleiches gilt für die in Figur 4 gezeigte Ausgestaltung.

Figur 4 verdeutlicht einen weiteren Vorteil einer Ausgestaltung, bei der die Fahrzeugaußenblende 1 mehrteilig ausgeführt ist und insbesondere die Außenleiste 1, die das äußere Leistenteil 7 ausbildet, auf eine Trägerleiste 3 aufgesteckt ist. Das Befestigungselement 13 ist derart angeordnet, dass es nach dem bestimmungsgemäßen Einbau der Außenblende 1 von dem die von außen sichtbare Zierfläche bildenden äußeren Leistenteil 7 verdeckt ist. Es ist auf der vom Rand der Scheibe 8 abgewandten Seite der Rastaufnahme 12 angeordnet. Eine derartige Konstruktion ermöglicht dem Konstrukteur Gestaltungen der Karosseriestruktur 14, die bei einer einteiligen Ausführung der Außenblende nicht möglich wären, da stets darauf zu achten wäre, dass die Befestigungsmittel und die verwendeten Montagewerkzeuge auch am äußeren Leistenteil vorbeigeführt werden müssen.

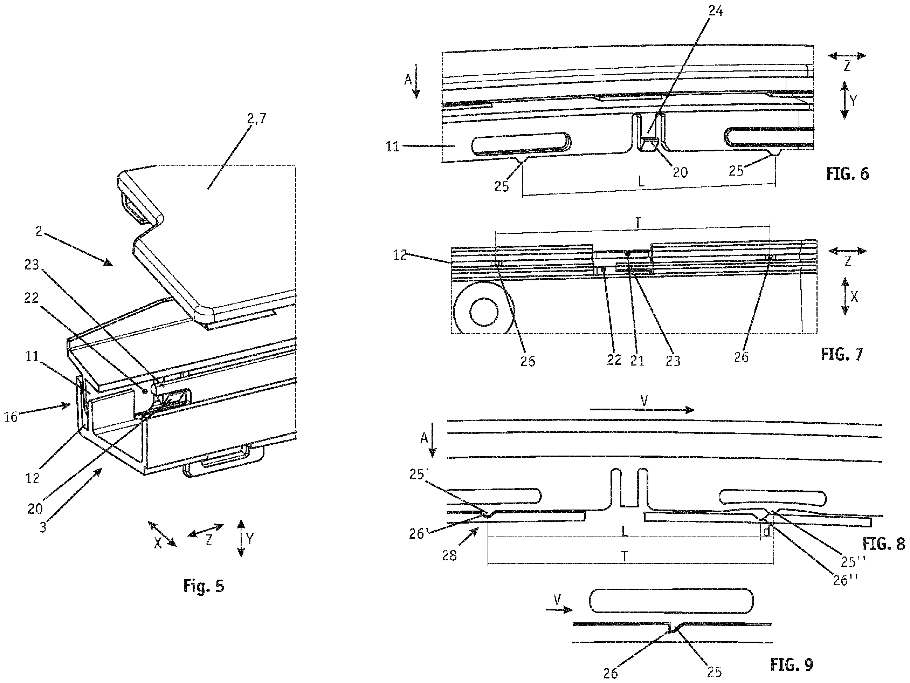

Figuren 5 bis 10 veranschaulichen die Rastverbindung 16 zwischen Trägerleiste 3 und Außenleiste 2. Dabei zeigt Figur 5 die auf der Trägerleiste 3 montierte Außenleiste 2, Figur 6 zeigt die Außenleiste in einer seitlichen Ansicht und Figur 7 zeigt die Trägerleiste 3 in einer Ansicht von oben in die Rastaufnahme hinein.

An der Trägerleiste 3 ist eine Rastaufnahme 12 in Form eines Kanals vorgesehen, der sich in Z-Richtung erstreckt und an den an der Außenleiste 2 angeordneten Raststeg 11 angepasst ist. Die Rastverbindung ist derart ausgestaltet, dass das an der Außenleiste 2 vorgesehene Rastglied 11 zunächst in einer ersten Richtung in das an der Trägerleiste 3 vorgesehene Rastglied 12 eingeschoben werden kann. Der Raststeg 11 samt dem am Rastfinger 24 vorgesehenen Rastfortsatz 20 kann aufgrund einer in der Wandung der kanalartigen Rastaufnahme 12 vorgesehenen Ausklinkung 22 zunächst widerstandslos in Y-Richtung in die kanalartige Rastaufnahme 12 eingeführt werden. Anschließend erfolgt eine Verschiebung der Außenleiste 2 gegenüber der Trägerleiste 3 in Z-Richtung, während der sich der Rastfortsatz 20 unter einen Rastvorsprung 23 schiebt, so dass die Außenleiste 2 gegen ein versehentliches Abnehmen von der Trägerleiste 3 in Y-Richtung gesichert ist.

Die Ausnehmung 21, die sich bei montierter Außenleiste auf der Rückseite des Rastfingers 24 befindet, gewährleistet, dass der Rastfinger 24 nach hinten einfedern kann. Die Ausnehmung 21 erstreckt sich dabei bevorzugt über eine Breite, die gewährleistet, dass der Rastfinger 24 sowohl beim Einführen des Raststegs 11 in die Rastaufnahme 12 in Y-Richtung als auch nach der anschließenden Verschiebung in Z-Richtung rückwärtig ausgelenkt werden kann, ohne gegen die innenseitige Wandung der Rastaufnahme 12 zu stoßen.

Es sei angemerkt, dass die Ausklinkung 22 auch weggelassen werden kann, was insbesondere zur Folge hätte, dass die Rastverbindung mehrstufig wäre, weil schon das Aufsetzen der Außenleiste 2 auf die Trägerleiste 3 zu einer Verrastung führen würde. Die Demontage wäre wegen der schlechten Zugänglichkeit des Rastfingers 24 bzw. des Rastfortsatzes 20 erschwert und insbesondere nur noch dann einfach möglich, wenn die Außenblende zuvor im Ganzen von der Karosseriestruktur abgenommen wurde. Eine derartige Ausgestaltung kann bei bestimmten Anwendungsfällen durchaus sinnvoll sein.

Die in den Figuren 5 bis 10 dargestellte Rastverbindung ist außerdem als mehrdirektionale Schiebe-/Rastverbindung ausgestaltet, bei der einer in Y-Richtung weisenden Aufsetzbewegung eine Verschiebung in Z-Richtung folgt.

Um zu verhindern, dass die zuvor beschriebene Verschiebung der Außenleiste 2 zur Trägerleiste 3 ungewollt rückgängig gemacht wird, ist an der Unterseite des Raststegs 11 ein Rastnocken 25 vorgesehen, der in hierzu korrespondierende Rastvertiefungen 26 an der Rastaufnahme 12 einfedert, wenn die Außenleiste 2 nach dem Aufsetzen auf die Trägerleiste 3 relativ zur Trägerleiste 3 verschoben wird. Einem nachträglichen Verrutschen der Außenleiste 2 relativ zur Trägerleiste 3 in Z-Richtung ist damit entgegenwirkt. Die Rastnocken 25 sind an einer am Raststeg 11 vorgesehenen Federrippe 27, die durch eine Materialausnehmung im Raststeg 11 gebildet sind, angeordnet. Selbstverständlich können die Rastnocken 25 und die Rastvertiefungen 26 auch an der jeweils anderen Leiste angeordnet sein.

Der Abstand L der einzelnen an der Außenleiste 2 vorgesehenen Rastglieder zueinander (in den Figuren beispielhaft der Abstand L der Rastnocken 25 zueinander) sowie der Abstand T der einzelnen an der Trägerleiste 3 vorgesehenen Rastglieder (in den Figuren beispielhaft der Abstand T der Rastvertiefungen 26 zueinander) ist dabei bevorzugt derart auf einander abgestimmt, dass die bei einer Verschiebung der Außenleiste 2 gegenüber der Trägerleiste 3 entstehenden Rastpaarungen nicht gleichzeitig, sondern aufeinander folgend entstehen. Die Rastglieder 25 und die hierzu korrespondierenden Rastglieder 26 sind also bevorzugt mit einem Versatz zueinander angeordnet, so dass eine Verschiebung der Außenleiste 2 relativ zur Trägerleiste 3 eine Mehrzahl von aufeinander folgenden Einrastungen zwischen den einzelnen Rastpaaren zur Folge hat. Damit lässt sich Erreichen, dass die Außenleiste 2 auf der Trägerleiste 3 über eine erste wirksam gewordene Rastpaarung hinaus über einen Verschiebeweg verschoben werden kann und während des Verschiebens nach und nach andere Rastpaarungen wirksam werden.

Der vorstehend beschriebene Vorgang lässt sich Figur 8 entnehmen, in der die Außenleiste 2 mit der Unterseite des Raststegs 11 auf dem Grund der Rastaufnahme mit einer Rastpaarung 28 in Eingriff steht (Rastnocken 25' und Rastvertiefung 26'). Die in Verschieberichtung V benachbarten Rastglieder 25" und 26" sind dagegen wieder außer Eingriff, nachdem die Außenleiste 2 um den Weg d gegenüber der Trägerleiste 3 verschoben wurde. Die Größe des Weges d wird der Fachmann an den jeweiligen Anwendungsfall anzupassen wissen.

Diese Ausgestaltung ist von besonderem Vorteil in Fällen, in denen die Außenleiste 2 zum Beispiel mit einer Stirnseite straff an einem benachbarten Bauteil, zum Beispiel einer Dichtung anliegen soll, die gewünschte Einbaulage der Außenleiste 2 gegenüber dem benachbarten Bauteil aber toleranzbedingt nicht vorab durch konstruktive Maßnahmen sichergestellt werden kann. Die auf die Trägerleiste aufgesetzte Außenleiste kann durch die vorgesehene Maßnahme in gewissen Grenzen "schrittweise" (je nach Größe des Versatzes auch nahezu stufenlos) gegen das benachbarte Bauteil geschoben werden, wobei bei jedem "Schritt" die Rastpaarung, über die die Außenleiste 2 an der Trägerleiste 3 gehalten ist, entsprechend des Versatzes der Rastglieder zueinander wechselt. Die konstruktiven Maße der einzelnen Bauteile muss selbstverständlich konstruktiv an den Verschiebeweg, den Versatz und die sonstigen Randbedingungen angepasst werden.

In Figur 8 ist die beschriebene Rastverbindung derart ausgestaltet, dass - nachdem die Außenleiste 2 gegenüber der Trägerleiste 3 in der Verschieberichtung V verschoben worden ist - das Verschieben in die der Verschieberichtung V entgegengesetzten Richtung nach wie vor möglich ist. Die Rastglieder sind weitgehend symmetrisch und ausgestaltet und deren aufeinander abgleitende Flächen erlauben eine Verschiebung der Leisten zueinander in beide Richtungen.

Demgegenüber zeigt Figur 9 eine alternative Ausgestaltung, bei der die Schiebe-/Rastverbindung eine einseitig wirkende Schiebe-/Rastverbindung ist. Es ist erkennbar, dass die Rastglieder 25, 26 in Figur 9 derart ausgestaltet sind, dass das nachträgliche Verschieben der Außenleiste 2 gegenüber der Trägerleiste 3 in einer der Verschieberichtung V entgegengesetzten Richtung nicht mehr möglich ist, weil die aneinander angrenzenden Flächen der in Eingriff stehenden Rastglieder aufgrund ihrer Geometrie eine solche Verschiebung nicht erlauben, so dass eine Verschiebung nur in Verschieberichtung V möglich ist.

Figur 10 zeigt schließlich eine alternative Ausgestaltung des in Figur 1 gezeigten Aufbaus, wobei der Unterschied im Wesentlichen darin besteht, dass das auf der Innenseite der Scheibe 8 angeordnete Führungsprofil 9 als längliche Führungsleiste ausgebildet ist. Es ist auch zu erkennen, dass der Bereich, in dem das Führungsprofil auf der Scheibeninnseite befestigt ist, mit einer undurchsichtigen Beschichtung 29 versehen ist, die verhindert, dass das Führungsprofil 9 von außen erkennbar ist. Außerdem verdeutlicht Figur 10 die Anordnung der Befestigungsmittel 13.

Figuren 10 und 11 zeigen darüber hinaus einen weiteren Aspekt, der im Übrigen auch bei einteilig ausgeführten Fahrzeugaußenblenden, bei denen Trägerleiste und Außenleiste von einem werkstoffeinstückigen Bauteil gebildet sein können, realisierbar ist.

Ein Formteil einer Türinnenverkleidung 5 ist mit der Fahrzeugaußenblende, insbesondere mit dem sich an der Karosseriestruktur abstützenden Stützteil der Fahrzeugaußenblende (bei der gezeigten mehrteiligen Ausführung mit der Trägerleiste 3) verrastet. Die diese in Figur 1 und Figur 10 erkennbare Rastverbindung 17 gewährleistenden Rastglieder sind in Figur 11 zu erkennen.

An der Türinnenverkleidung 5 sind stegartige Vorsprünge 30 mit Rastnasen 31 angeordnet, die in Ausnehmungen oder Vertiefungen 32 in dem Stützteil der Fahrzeugaußenblende eingreifen. Außerdem können an der Türinnenverkleidung 5 Positionierungsstege 33 vorgesehen sein, die beim Zusammenfügen von Fahrzeugaußenblende und Türinnenverkleidung 5 in korrespondierende Positionierungsaufnahmen 34 eingreifen. Die Positionierungsaufnahmen 34 übergreifen die Positionierungsstege 33 unterseitig (in Y-Richtung gesehen auf der zum Fahrzeuginneren gewandten Seite der Fahrzeugaußenblende) und stützen damit die Türinnenverkleidung 5 bzw. die über die Rastverbindung 17 auf die Türinnenverkleidung 5 wirkenden Kräfte ab, so dass die Türinnenverkleidung sicher an der Fahrzeugaußenblende 1 gehalten ist. Die Positionierungsaufnahme 34 kann, wie in der Figur gezeigt, die Form eines den Positionierungssteg 33 übergreifenden Bügels haben.

Figuren 12, 13 und 14 verdeutlichen das Ineinandergreifen der Rastverbindung 17 zwischen Türinnenverkleidung 5 und Fahrzeugaußenblende noch einmal anschaulich, wobei Figur 12 einen Schnitt durch Positionierungssteg 33 und Positionierungsaufnahme 34 zeigt, Figur 12 einen Schnitt durch Vorsprung 30 mit Rastnase 31 und die Ausnehmung 32 zeigt und wobei Figur 13 einen Schnitt durch das Befestigungselement 13 zeigt.

### Bezugszeichenliste

- 1: Fahrzeugaußenblende
- 2: Außenleiste
- 3: Trägerleiste
- 4: Dichtungen
- 5: (Formteil einer) Türinnenverkleidung
- 6: Dichtungsaufnahmekanal
- 7: äußeres Leistenteil
- 8: Versenkscheibe
- 9: Führungsprofil
- 10: Wandungssteg des Dichtungsaufnahmekanals
- 11: Raststeg
- 12: Rastaufnahme
- 13: Befestigungsmittel
- 14: Karosseriestruktur (Türstruktur)
- 15: Steg
- 16: Rastverbindung zwischen Trägerleiste und Außenleiste
- 17: Rastverbindung zwischen Trägerleiste und Türinnenverkleidung
- 18: Basisschenkel
- 19: Führungsschenkel
- 20: Rastfortsatz
- 21: Ausnehmung
- 22: Ausklinkung
- 23: Rastvorsprung
- 24: Rastfinger
- 25: Rastnocken
- 26: Rastvertiefung
- 27: Federrippe
- 28: erste Rastpaarung
- 29: Beschichtung
- 30: Vorsprünge
- 31: Rastnasen
- 32: Ausnehmung/Vertiefung
- 33: Positionierungsstege
- 34: Positionierungsaufnahmen

- A: Aufsetzrichtung
- V: Verschieberichtung

## Patentansprüche

1. Fahrzeugaußenblende (1) mit einer Außenleiste (2) und einer Trägerleiste (3), wobei im bestimmungsgemäßen Einbauzustand die Außenleiste (2) mit der zum Fahrzeugäußeren gewandten Oberfläche eines äußeren Leistenteils (7) einen Teil der Fahrzeugaußenfläche bildet und auf die Trägerleiste (3), die im bestimmungsgemäßen Einbauzustand mit der Fahrzeugkarosseriestruktur (14) verbunden ist, aufgesetzt ist, **dadurch gekennzeichnet, dass** die Außenleiste (2) und die Trägerleiste (3) gemeinsam einen Führungskanal für ein an einer Versenkscheibe (8) angeordnetes Führungsprofil (9) ausbilden.

2. Fahrzeugaußenblende nach Anspruch 1, **dadurch gekennzeichnet, dass** die Außenleiste (2) derart mit der Trägerleiste (3) verbunden ist, dass im bestimmungsgemäßen Einbauzustand eine von der Scheibe (8) auf die Außenleiste (2) oder auf ein an der Außenleiste (2) angeordnetes Funktionsbauteil (4") wirkende Kraft vor dem äußeren Leistenteil (7) auf die Trägerleiste (3) abgeleitet ist.

3. Fahrzeugaußenblende nach einem der vorhergehenden Ansprüche, **dadurch gekennzeichnet, dass** die Trägerleiste (3) bzw. die Außenleiste (2) zur Ausbildung einer Rastverbindung (16) eine sich in Z-Richtung kanalartig erstreckende Rastaufnahme (12) ausbildet, in der ein an der Außenleiste (2) bzw. der Trägerleiste (3) vorgesehener, korrespondierender und sich entlang der Außenleiste (2) bzw. Trägerleiste (3) in Z-Richtung erstreckender Raststeg (11) verrastend einsetzbar ist.

4. Fahrzeugaußenblende nach einem der vorhergehenden Ansprüche, **dadurch gekennzeichnet, dass** zur Verbindung von Trägerleiste (3) und Außenleiste (2) eine Schiebe-/Rastverbindung (16) vorgesehen ist, bei der die Außenleiste (2) zur Verrastung mit der Trägerleiste (3) in eine erste Richtung (Aufsetzrichtung A), bevorzugt in Y-Richtung, auf die Trägerleiste (3) aufzusetzen ist und anschließend in eine zur ersten Richtung verschiedene zweiten Richtung (Verschieberichtung V), bevorzugt in Z-Richtung, gegenüber der Trägerleiste (3) zu verschieben ist.

5. Fahrzeugaußenblende nach dem vorhergehenden Anspruch, **dadurch gekennzeichnet, dass** die Schiebe-/Rastverbindung eine einseitig wirkende Schiebe-/Rastverbindung ist.

6. Fahrzeugaußenblende nach einem der vorhergehenden Ansprüche, **dadurch gekennzeichnet, dass** zur Realisierung einer Rastverbindung (16) an der Außenleiste (2) und der Trägerleiste (3) vorgesehene Rastglieder (25, 26) derart versetzt zueinander angeordnet sind, dass eine Verschiebung der Außenleiste (2) relativ zur Trägerleiste (3) eine Mehrzahl von aufeinander folgenden Einrastungen zur Folge hat.

7. Fahrzeugaußenblende nach einem der vorhergehenden Ansprüche, **dadurch gekennzeichnet, dass** Aufnahmen für Befestigungsmittel (13), mit der die Trägerleiste (3) bei bestimmungsgemäßer Montage an der Karosseriestruktur (14) zu befestigen ist, auf derjenigen Seite einer zur Außenblende im bestimmungsgemäßen Endeinbauzustand benachbarten Scheibe (8) vorgesehen sind, die - in X-Richtung gesehen - die von dem Rand der Scheibe (8) abgewandte Seite der Trägerleiste (3) ist.

8. Fahrzeugaußenblende nach einem der vorhergehenden Ansprüche, **dadurch gekennzeichnet, dass** Aufnahmen für Befestigungsmittel (13), mit der die Trägerleiste (3) bei bestimmungsgemäßer Montage an der Karosseriestruktur (14) zu befestigen ist, derart angeordnet sind, dass diese nach bestimmungsgemäßer Endmontage der Außenleiste (2) auf der Trägerleiste (3) von der Außenleiste (2) verdeckt sind.

9. Fahrzeugaußenblende nach einem der vorhergehenden Ansprüche, **dadurch gekennzeichnet, dass** an der Trägerleiste (3) Rastglieder (30, 31, 32) vorgesehen sind, über die bestimmungsgemäß ein Formteil einer Türinnenverkleidung (5) mittels einer Rastverbindung (17) mit der Trägerleiste (3) verbindbar ist.

10. Aufbau einer Scheibenführung für eine Versenkscheibe eines Kraftfahrzeugs mit einer Fahrzeugaußenblende nach einem der vorhergehenden Ansprüche, **dadurch gekennzeichnet, dass** auf der zum Fahrzeuginneren gewandten Scheibenoberfläche einer zur Fahrzeugblende benachbarten Scheibe (8) ein Führungsprofil (9) angeordnetist, das eine an der Außenleiste (2) vorgesehene Dichtungsaufnahme (6) auf der zum Fahrzeuginneren gewandten Seite hintergreift.

11. Aufbau einer Scheibenführung nach dem vorhergehenden Anspruch, **dadurch gekennzeichnet, dass** das Führungsprofil (9) derart in einen zwischen der Außenleiste (2) und der Trägerleiste (3) gebildeten Führungskanal eingreift, dass die Scheibe (8) in positiver und negativer X-Richtung geführt ist.

12. Aufbau einer Scheibenführung nach dem vorhergehenden Anspruch, **dadurch gekennzeichnet, dass** das Führungsprofil (9) sich zur einen Seite gegen die Trägerleiste (3) oder ein an der Trägerleiste (3) angeordnetes Funktionsbauteil (4") abstützt und zur anderen Seite gegen die Außenblende (2) oder ein an der Außenblende (2) angeordnetes Funktionsbauteil (4') abstützt.

## Claims

1. External vehicle trim (1) with an external strip (2) and a support strip (3), wherein the external strip (2) in its intended installed condition forms one part of the external vehicle surface with a surface of an external strip part (7) which surface is facing towards the outside of the vehicle, and onto which the support strip (3), which in its intended installed condition is connected with the vehicle chassis structure (14), is placed on, **characterised in that** the external strip (2) and the support strip (3) together form a guide channel for a guide profile (9) arranged on a lowerable window pane (8).

2. External vehicle trim according to claim 1, **characterised in that** the external strip (2) is connected with the support strip (3) in such a way that a force acting from the pane (8) on the external strip (2) or on an function component (4") arranged on the external strip (2) is diverted to the support strip (3) before the external strip part (7) in the intended installed condition.

3. External vehicle trim according to one of the preceding claims, **characterised in that** the support strip (3) or the external strip (2) forms an arresting holder (12) extending in direction Z in way of a channel, in which a corresponding arresting bridge (11) envisaged on the external strip (2) or the support strip (3) extending along the external strip (2) or the support strip (3) in direction Z can be inserted and arrested for forming an arresting connection (16).

4. External vehicle trim according to one of the preceding claims, **characterised in that** a sliding/arresting connection (16) is envisaged for connecting support strip (3) and external strip (2), where the external strip (2) is to be positioned on the support strip (3) in a first direction (positioning direction A), preferably in direction Y, for arresting with the support strip (3), and is then pushed in a second direction (displacement position V) that differs from the first direction, preferably in direction Z, opposite the support strip (3).

5. External vehicle trim according to the preceding claim, **characterised in that** the sliding/arresting connection is a sliding/arresting connection that works unilaterally.

6. External vehicle trim according to one of the preceding claims, **characterised in that** arresting members (25, 26) envisaged on the external strip (2) and the support strip (3) for realising an arresting connection (16) are arranged offset from each other in such a way that a displacement of the external strip (2) relative to the support strip (3) results in a multitude of successive arresting movements.

7. External vehicle trim according to one of the preceding claims, **characterised in that** holders for fitting means (13), with which the support strip (3) is to be fitted to the chassis structure (14) following its intended assembly, are envisaged on the side of a pane (8) neighbouring the external trim in its intended final installed condition that is the side of the support strip (3) facing away from the edge of the pane (8) when viewed in direction X.

8. External vehicle trim according to one of the preceding claims, **characterised in that** holders for fitting means (13), with which the support strip (3) is to be fitted to the chassis structure (14) following its intended assembly, are arranged in such a way that these are covered by the external strip (2) following the intended final assembly of the external strip (2) on the support strip (3).

9. External vehicle trim according to one of the preceding claims, **characterised in that** arresting members (30, 31, 32) are envisaged on the support strip (3), with which a moulded part of an internal door trim (5) is intended to be connectable with the support strip (3) by means of an arresting connection (17).

10. Construction of a window pane guide for a lowerable window pane of a motor vehicle with external vehicle trim according to one of the preceding claims, **characterised in that** a guide profile (9) is arranged on the pane surface of a pane (8) next to the vehicle trim facing the vehicle interior, which engages behind a seal holder (6) envisaged on the external strip (2) on the side facing the vehicle interior.

11. Construction of a window pane guide according to the preceding claim, **characterised in that** the guide profile (9) engages a guide channel formed between the external strip (2) and the support strip (3) in such a way that the pane (8) is guided in a positive and a negative direction X.

12. Construction of a window pane guide according to the preceding claim, **characterised in that** the guide profile (9) supports itself against the support strip (3) or against a function component (4") arranged on the support strip (3) on one side, or against the external trim (2) or a function component (4') arranged on the external trim (2) on the other side.

## Revendications

1. Garniture extérieure de véhicule (1) avec une barre extérieure (2) et une barre de support (3), à l'état de montage conforme, la barre extérieure (2) formant une partie de la surface extérieure du véhicule avec la surface d'une partie de barre extérieure (7) orientée vers l'extérieur du véhicule et étant posée sur la barre de support (3) qui est raccordée à la structure de carrosserie du véhicule (14) à l'état de montage conforme, **caractérisée en ce que** la barre extérieure (2) et la barre de support (3) forment ensemble un canal de guidage pour un profilé de guidage (9) disposé sur une plaque descendante (8).

2. Garniture extérieure de véhicule selon la revendication 1, **caractérisée en ce que** la barre extérieure (2) est raccordée à la barre de support (3) de telle sorte que, à l'état de montage conforme, une force de la plaque (8) agissant sur la barre extérieure (2) ou sur un composant fonctionnel (4") disposé sur la barre extérieure (2) est dérivée de la partie de barre extérieure (7) sur la barre de support (3).

3. Garniture extérieure de véhicule selon l'une des revendications précédentes, **caractérisée en ce que** la barre de support (3) ou la barre extérieure (2) forme un logement de verrouillage (12) s'étendant comme un canal dans la direction Z pour former une liaison d'encliquetage (16), logement de verrouillage dans lequel une traverse d'encliquetage (11) correspondante prévue sur la barre extérieure (2) ou la barre de support (3) et s'étendant le long de la barre extérieure (2) ou de la barre de support (3) dans la direction Z est à insérer par encliquetage.

4. Garniture extérieure de véhicule selon l'une des revendications précédentes, **caractérisée en ce que** pour raccorder la barre extérieure (2) à la barre de support (3), une liaison à encliquetage et à coulissement (16) est prévue, avec laquelle la barre extérieure (2) et à déposer sur la barre de support (3) pour l'encliqueter avec la barre de support (3) dans une première direction (direction de mise en place A), de préférence dans la direction Y puis à coulisser dans une deuxième direction (direction de coulissement V) différente de la première, de préférence dans la direction Z, par rapport à la barre de support (3).

5. Garniture extérieure de véhicule selon la revendication précédente, **caractérisée en ce que** la liaison à encliquetage et à coulissement est une liaison à encliquetage et à coulissement agissant sur un côté.

6. Garniture extérieure de véhicule selon l'une des revendications précédentes, **caractérisée en ce que,** pour réaliser une liaison à encliquetage (16) à la barre extérieure (2) et la barre de support (3), des éléments d'encliquetage (25, 26) sont disposés de manière décalée les uns par rapport aux autres de telle sorte qu'un coulissement de la barre extérieure (2) par rapport à la barre de support (3) entraîne une multitude d'encliquetages successifs.

7. Garniture extérieure de véhicule selon l'une des revendications précédentes, **caractérisée en ce que** des logements pour l'élément de fixation (13), avec lequel la barre de support (3) doit être fixée à la structure de la carrosserie du véhicule (14) à l'état de montage conforme, sont prévus sur le côté d'une plaque adjacente (8) de la garniture extérieure à l'état de montage conforme, côté qui, considéré en la direction X, est le côté de la barre de support (3) situé à l'opposé du bord de la plaque (8).

8. Garniture extérieure de véhicule selon l'une des revendications précédentes, **caractérisée en ce que** des logements pour l'élément de fixation (13), avec lequel la barre de support (3) doit être fixée à la structure de la carrosserie du véhicule (14) à l'état de montage conforme, sont disposés de telle sorte que ceux-ci sont recouverts sur la barre de support (3) par la barre extérieure (2) à la fin du montage conforme de la barre extérieure (2).

9. Garniture extérieure de véhicule selon l'une des revendications précédentes, **caractérisée en ce que** des éléments d'encliquetage (30, 31, 32) sont prévus sur la barre de support (3) par lesquels une pièce moulée d'un habillage intérieur de porte (5) peut être reliée à la barre de support (3) à l'aide d'une liaison à encliquetage (17).

10. Structure d'une glissière de guidage destinée à une plaque descendante d'un véhicule avec une garniture extérieure de véhicule selon l'une des revendications précédentes, **caractérisée en ce qu'un** profilé de guidage (9) est disposé sur la surface de plaque, orientée vers l'intérieur du véhicule, d'une plaque (8) adjacente de la garniture du véhicule, profilé de guidage qui vient en prise avec un logement de joint (6) prévu à la barre extérieure (2) sur le côté orienté vers l'intérieur du véhicule.

11. Structure d'une glissière de guidage selon la revendication précédente, **caractérisée en ce que** le profilé de guidage (9) s'engrène dans un canal de guidage formé entre la barre extérieur (2) et la barre de support (3) de telle sorte que la plaque (8) est dirigée dans la direction X positive et négative.

12. Structure d'une glissière de guidage selon la revendication précédente, **caractérisée en ce que** le profilé de guidage (9) s'appuie d'une part contre la barre de support (3) ou un composant fonctionnel (4") disposé sur la barre de support (3) et d'autre part contre la garniture extérieure (2) ou un composant fonctionnel (4') disposé sur la garniture extérieure (2).
